# EUROPEAN PATENT SPECIFICATION

(11) **EP 2 638 801 B1**
(45) Date of publication and mention of the grant of the patent: **10.05.2017**
(21) Application number: 13158953.3
(22) Date of filing: 13.03.2013
(51) Int. Cl.: A01M 29/34, A01G 13/00, A01C 13/00

(54) **Apparatus for controlling pest insects**
Vorrichtung zur Bekämpfung von Schadinsekten
Dispositif pour le contrôle d'insectes du sol

(30) Priority: 14.03.2012 FI 20125286
(43) Date of publication of application: 18.09.2013
(60) Divisional application: 17157868.5
(73) Proprietor: UPM-Kymmene Corporation, 00100 Helsinki (FI)
(72) Inventor: Immonen, Anne, FI-79100 Leppävirta (FI); Kuru, Kari, FI-45370 Valkeala (FI)
(74) Representative: Boco IP Oy Ab

(56) References cited:
- EP-A2- 0 465 327
- WO-A1-91/12717
- WO-A1-02/076178
- FR-A1- 2 914 818
- US-A- 4 416 335
- US-A1- 2007 175 093
- US-B1- 6 289 829
- KRISTINA WALLERTZ: 'The pine weevil problem-what can be done?', [Online] 07 October 2009, XP055146916 Retrieved from the Internet: <URL:http://www.nordgen.org/ngdoc/forest/Ko nferanser/2009_Wallertz.pdf> [retrieved on 2014-10-15]
- Göran Nordlander ET AL: "A flexible sand coating (Conniflex) for the protection of conifer seedlings against damage by the pine weevil Hylobius abietis", Agricultural and Forest Entomology, vol. 11, no. 1, 1 February 2009 (2009-02-01), pages 91-100, XP055209740, ISSN: 1461-9555, DOI: 10.1111/j.1461-9563.2008.00413.x

## Description

### FIELD OF THE INVENTION

The invention relates to an apparatus for controlling beetles and weevils.

### BACKGROUND

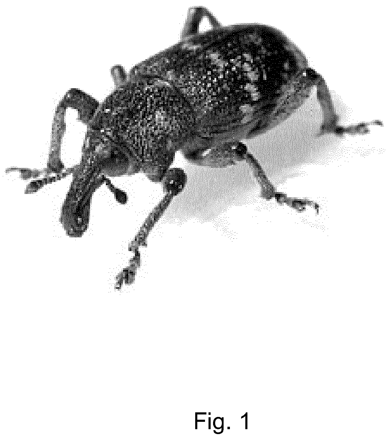

Weevils belonging to the family *Curculionidae* (the true weevils) are beetles known as pests of trees. Large pine weevil *(Hylobius abietis),* presented in Figure 1, is a widespread insect and the most significant pest insect in the forest regeneration phase. The large pine weevil adult is typically 8 - 14 mm in length. Its Finnish name *tukkimiehentä i* ("lumberjack's louse") derives from its ability to cling firmly to a forester's clothes especially at fresh logging sites. Its close relatives include e.g. *Hylobius pinastri* and *Hylobius albosparsus,* which are well known pests.

Large pine weevils swarm in May-June and they lay eggs in the soil on the bark or cortex of a rotting wood in the vicinity of fresh stumps. The larvae live in the soil in the roots of stumps under the bark for 2 - 5 years and feed on phloem, after which they pupate into the root's surface part. Once the larva grows up, it tunnels into the soil surface. Adult insects gnaw the bark on the base of young seedlings and use phloem and cambium for nutrition. Large pine weevil's eating habits mostly destroy 1-3-year-old planting seedlings of pines and spruces, but it is almost omnivorous in terms of woody food plants, making both coniferous trees and broad-leaved trees its potential nutrition. The eating goes on for the whole summer but is most intense in the beginning of the summer. Damages in the seedling's bark expose the seedling to fungal damage. In seedlings where the bark has been eaten annularly around the trunk, the fluid and nutriment flow is prevented, eventually resulting in the death of the seedling. Young seedlings develop a resistance against large pine weevils in Northern regions, such as in Finland, around the age of 3 - 5. Elsewhere in Europe, e.g. in Scotland, the eating may continue for up to 8 - 10 years after the planting.

The length of the large pine weevil's lifecycle varies from one year in Southern distributions to three years in Northern regions. The large pine weevil adults can be found all year round, although they usually hibernate during the cold winter months. The adult insect's movement depends for instance on the climate and the vicinity of the sea. For example in Scotland the large pine weevil adult walks on the soil, apart from the early summer swarming. In Finland the large pine weevil flies also at other times and the swarming flying mainly takes place during a couple of weeks, although some of the insects may fly the whole summer. Once they get to a suitable breeding ground, their flying muscles atrophy and the insects primarily move about by walking. The insects move on to a fresh logging opening usually within a 10 kilometer radius, but they can also fly up to 80 km.

The large pine weevil has spread to the entire Europe and Asia and it causes remarkable damages to forestry. It can be found especially in coniferous forests and very commonly also in timber handling and sawing areas.

Fresh logging waste and the mixture of ethanol and alpha-pinene attract the large pine weevil in early summer during the swarming season. It is therefore extremely difficult to prevent the large pine weevil from breeding in logging openings, as tree stumps and logging waste should be removed entirely in order to prevent the development of larvae. During the swarming season the large pine weevils can also find their way to new wood and timber buildings.

Regeneration of forests and forest cultivation are prerequisites for achieving sustainable forestry. The nature of currently used forest regeneration measures has changed to such that it favors the damages caused by the large pine weevil. In uncultivated planting areas of seedlings approximately 20 - 70 % of the seedlings have died during the first summer. The damages usually occur up until the third year after the planting especially in Northern areas.

A number of methods have been presented for controlling the damages, such as treating the seedlings with insecticides in the nurseries before the planting, treating the seedlings with insecticides in the ground, wherein a backpack pressure sprayer or the dipping method is usually used, or blending the insecticide in the planting hole or soil. The effect of chemical insecticides is maintained for the first two growing seasons. Pyrethroid-based insecticides, such as products containing permethrin, deltamethrin or alpha-sypermethrin, have widely been used since the 1980s. The use of permethrin has been prohibited in the EU since 2003 and for instance in Sweden the use of most insecticides has been fully prohibited. All plant-protecting agents acceptable for the control of large pine weevils are extremely toxic to the water system and fish in particular. Through ditches and after a heavy rain these agents may drift into lakes and rivers along with the surface water. There is always the danger that the insecticide regulations change and effective insecticides can no longer be used at all.

Seedlings are also protected with different kinds of mechanical solutions, the purpose of which is to prevent the large pine weevil from getting on the trunk of the seedlings. In structure, these mechanical solutions may be shells, cones, socks or wax- or latex-based agent to be sprayed on the seedling surfaces. The effect of the mechanical protection is at its best during the first summer but will weaken already during the second summer once the undergrowth becomes eutrophic. Mechanical protections are usually applied manually, which is very time-consuming.

Damages are prevented and controlled also by silvicultural practices, wherein especially the breeding material available for large pine weevils is affected. For instance the planting of seedlings can be delayed until most of the large pine weevils born and grown at the site have vanished, i.e. at least three years after the logging. A sufficient amount of shelterwood can also be left in the logging area, because large pine weevils are known to eat the bark of annual shoots on the tops of aged trees. Further, larger seedlings whose survival rate after the eating damage is better than that of smaller seedlings and which also recover better from larger eating damages, may be also used in the planting.

Cultivation of soil is also commonly used to reduce the seedling damages. The large pine weevil tends to minimize the time it spends on the mineral soil. Ploughing, which has previously been used widely, revealed a broad mineral soil zone at once, in which the seedling was planted and the extent of damages was thus efficiently limited. In various soil cultivation and milling methods the mineral soil and humus are mixed, which weakens the effect of the cultivation, as the large pine weevil likes walking on the humus. Mounding, in which the mineral soil is turned on the top of the soil and the humus is turned below the tussock, has been proven to have a protective effect against the damages by the large pine weevil during the first year. The effect of mounding weakens during the second and third year, however.

Biological control is another method that has also been suggested for controlling the damages. In biological control the parasites or nematodes of the large pine weevil are used.

A method for the protection of tree seedlings against feeding damage by *Hylobius abietis* (L.) is described in WO 03/024216. In this method the seedling is sprayed and coated with a binder, such as a polymer dispersion, and the dispersion is then coated with an inorganic particulate agent, such as sand, that adheres to the binder. The particle size distribution of the particulate material is narrow and the mean particle diameter is suitably in the range from 0.1 to 0.5 mm, the upper limit being equal to the average distance between the mandibles in the mouth opening of the pine weevil, and the distance between two particles shall not exceed 2 mm, so that the weevil cannot insert its snout between them.

WO 91/12717 discloses a method for preventing the advance of insects on parts of biological plants wherein a mechanical barrier composed of large number of flexible tread-like fibers which are placed loosely together or joined together is placed on the path of insects. Also an apparatus is described for winding the fiber material on a plant.

Since forest regeneration areas are often large, devices and apparatus planned for seedling planting are nowadays used in the planting of seedlings, with the aid of which the mounding and planting are carried out.

Based on what has been presented above, there exists a need for new, efficient and ecological methods both for controlling the weevil damages and for planting tree plants.

### SUMMARY OF THE INVENTION

The present invention relates to the control of weevils belonging to the family *Curculionidae* and prevention of damages they cause in tree plants, especially in connection with planting of seedlings and suitably in connection with machine planting i.e. when planting machines are used in the planting. In connection with the planting of tree plants, a layer of protective material is applied on the surface of the soil surrounding the trunk of the seedlings. The protective material gives the seedlings a protection against weevil damages. Optionally, the protective material may also be applied on the seedling and/or the surface of the seedling's trunk. Controlling weevils belonging to the family *Curculionidae* comprises the steps where a seedling is planted in soil and, in connection with the planting, at least one layer of the protective material is applied on the surface of the soil surrounding the trunk of the seedling, said layer having a thickness between 1 and 50 mm, suitably between 10 and 50 mm, particularly suitably between 20 and 40 mmm, and which layer forms a protective area around the seedling, wherein the minimum distance of the area's outer edge from the seedling's trunk is between 0.5 and 10 cm, suitably between 1 and 5 cm, particularly suitably between 1.5 and 2.5 cm. Optionally, the protective material may also be applied on the seedling and/or the surface of the seedling's trunk. A method for planting tree plants comprises the steps where a seedling is planted in soil and, in connection with the planting, at least one layer of protective material is applied on the surface of the soil surrounding the trunk of the seedling, said layer having a thickness between 1 and 50 mm, suitably between 10 and 50 mm, particularly suitably between 20 and 40 mmm, and which layer forms a protective area around the seedling, wherein the minimum distance of the area's outer edge from the seedling's trunk is between 0.5 and 10 cm, suitably between 1 and 5 cm, particularly suitably between 1.5 and 2.5 cm. Optionally, the protective material may also be applied on the seedling and/or the surface of the seedling's trunk. An apparatus may be used for the application, wherein the method may be implemented in connection with machine planting.

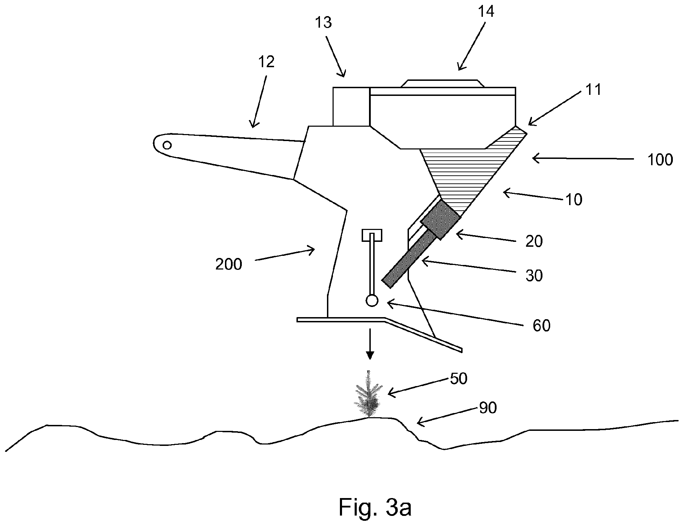

An apparatus according to one embodiment has been illustrated in figure 3a. The apparatus (100) for the protection of seedlings in connection with machine planting comprises a container (10) for the protective material, which container (10) comprises a feed opening (11) for feeding the protective material into the container, a dispenser (20) mounted on the container (10) for dispensing the protective material, a pipe (30) mounted on the dispenser (20), means (12) for mounting the device on the planting machine and means (13) for connecting the device to the planting machine's control system.

The invention provides an apparatus for forest regeneration, in which the control of weevils, especially large pine weevils, and the planting of seedlings takes place simultaneously in an efficient, ecological and economical way.

The characteristic features of the invention are presented in the appended claims.

### BRIEF DESCRIPTION OF THE DRAWINGS

**Figure 1** illustrates large pine weevil, *Hylobius abietis,* which is a weevil belonging to the family *Curculionidae.*

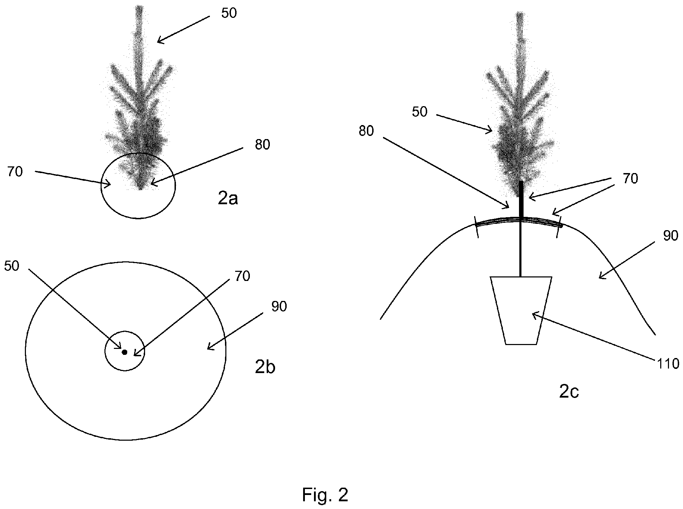

**Figure 2** (2a - 2c) illustrates a schematic presentation of a seedling around which a layer of protective material has been applied according to one embodiment. Figure 2a represents a seedling (50) from the front, which is surrounded by a protective area (70) comprising protective material all the way from the seedling's trunk (80). Figure 2b illustrates a planting tussock from the top view, with a seedling (50) (seedling's trunk) in the middle of it and a protective area (70) comprising protective material around it. Figure 2c illustrates a cross-section of a planting tussock (90), where there is a layer of protective material around the seedling (50) (seedling trunk) and on top of the trunk (80), wherein the protective area (70) comprises both the soil area around the seedling (50) and part of the seedling's trunk (80). The seedling ball (110) is in the tussock (90) in the humus layer.

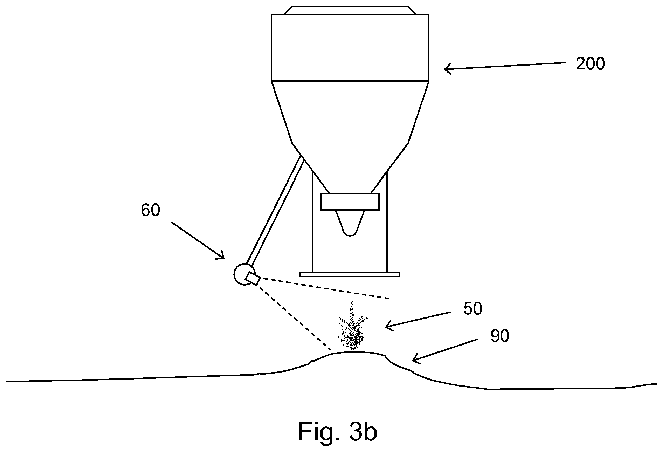

**Figure 3** (3a - 3b) illustrates a schematic presentation of an apparatus according one embodiment for protecting seedlings in connection with machine planting and for controlling weevils. The apparatus (100) has been presented in figure 3a from the side view and in figure 3b from the front. The planting machine (200) on which the apparatus has been mounted, has not been illustrated in greater detail, since the apparatus can be easily connected to different machines regardless of the brand. Figure 3b illustrates the operation of an optional camera (60) for the planting machine (200) with the aid of which the seedling can be planted in the tussock (90).

The apparatus (100) for protecting seedlings in connection with machine planting comprises:
- a container (10) for the protective material, which container (10) comprises a feed opening (11) for feeding the protective material into the container,
- a dispenser (20) mounted on the container (10) for dispensing the protective material,
- a pipe (30) which is connected to the dispenser (20) and which directs the protective material to the desired location,
- means (12) for connecting the apparatus (100) to the planting machine (200) and
- means (13) for connecting the device to the planting machine's control system.

### DEFINITIONS

Unless otherwise specified, the terms which are used in the specification and claims have the meanings commonly used in the field of forestry and wood production. Specifically, the following terms have the meanings indicated below :
As used herein, the term "control of weevils" means protection of seedlings against the damages caused by the attacks of insects belonging to the family *Curculionidae.*

The term "seedling" refers here to young tree plants whose age varies from one month to 5 years. According to one suitable embodiment the tree plant refers to forest tree plants, particularly to coniferous tree plants.

The term "planting" refers here to planting of tree seedlings in soil in forests or other destinations, where the trees are allowed to grow until harvested. The tree seedlings are propagated and pre-grown at tree nurseries prior to planting.

The term "machine planting" refers here to the planting of seedlings with the help of a planting machine.

The term "mounding," as used herein refers to a soil cultivation method in which a soil layer underneath the surface layer is turned on the top of the soil and the surface layer is turned below the surface. Typically, mineral soil is turned on the top of the soil and the humus is left below the mineral soil, allowing the humidity to rise from the soil uninterrupted. Examples of mounding are spot mounding, drain mounding, shallow drain mounding and reversal mounding.

Spot mounding means mounding where a tussock is made by pulling soil from a spot and then turning it next to the spot on top of uncultivated soil, wherein a double humus layer is left inside the tussock. This may suitably be done manually, with the tip of an excavator's bucket, mounding soil preparation plate, mounding machine pulled by a forwarder, or a device suitable for machine planting.

In drain mounding the tussock soils are taken from the surface soil of the spot to be drained. The extra soil from the drains is dumped, but the seedlings are planted only in the tussocks.

Reversal mounding means mounding in which the soil is dug for instance with an excavator's bucket, leaving a hole in the ground, and the very same soil is then laid down in the same hole so that the humus is left at the bottom of the hole.

In shallow drain mounding drains are made and the excavated soil is used to make tussocks on unbroken soil on top of the dry peat.

Protective area refers here to a unified area covered with the protective material, area that the protective material forms around the seedling, and the protective material extends all the way to the base of the seedling's trunk. The area may be circle-form or irregular or of any shape, and its outer edge forms the perimeter of a circle or the outer limit of an other-shaped area. In the protective area the material has been distributed as evenly as possible from the trunk's base to the outer edge of the area and preferably so that there are no visible holes in the area.

### DETAILED DESCRIPTION OF THE INVENTION

The present invention is based on studies on the control of gnawing beetles, particularly weevils belonging to the family *Curculionidae,* particularly in connection with planting of seedlings, which is carried out for instance in forest cultivation and forest regeneration. The researchers found out that once a layer of protective material was applied around the seedling and its base in connection with the planting of a seedling, the damages caused by weevils, such as the large pine weevil, were reduced.

In figure 2 one embodiment is illustrated. Figure 2a represents a seedling (50) from the front, which is surrounded by a protective area (70) comprising protective material starting from the base of the seedling (80). Figure 2b is a schematic top view of a planting tussock (90), in the middle of which there is a seedling (50) which is surrounded by a protective area (70) comprising protective material. 2c illustrates a cross-section of a planting tussock (90), where there is a layer of protective material around the seedling (50) and also on the trunk (80), and the seedling ball (110) is in the humus layer (90) inside the tussock.

The method is suitable for manual planting and machine planting, the latter enabling the planting of large volumes of seedlings. Thus, according to one embodiment, the control of weevils may be carried out in connection with machine planting.

The invention allows cutting down the use of insecticides and even abandon them entirely, if necessary. In the latter case the insecticides would no longer be released in the environment and water system to upset the ecosystem on a larger scale. Therefore, remarkable economical savings can also be achieved. When the method is used in connection with machine planting the control measures carried out in the nurseries may be left out or at least reduced, thus also reducing the exposure of nursery workers and seedling planters to insecticides. This is a clear advantage in terms of occupational health and safety.

A method for controlling weevils belonging to the *Curculionidae* family comprises the steps where a seedling is planted in soil and, in connection with the planting, at least one layer of protective material is applied on the surface of the soil surrounding the seedling's trunk, which layer has a thickness between 1 and 50 mm, suitably between 10 and 50 mm, particularly suitably between 20 and 40 mm, and which layer forms a protective area around the seedling, wherein the minimum distance of the area's outer edge from the seedling' trunk is between 0.5 and 10 cm, suitably between 1 and 5 cm, particularly suitably between 1.5 and 2.5 cm. Optionally, the protective material may also be applied on the seedling and/or on the surface of the seedling's trunk.

A method for planting tree plants comprises the steps where a seedling is planted in soil and, in connection with the planting, at least one layer of protective material is applied on the surface of the soil surrounding the seedling's trunk, which layer has a thickness between 1 and 50 mm, suitably between 10 and 50 mm, particularly suitably between 20 and 40 mm, and which layer forms a protective area around the seedling, wherein the minimum distance of the area's outer edge from the seedling's trunk is between 0.5 and 10 cm, suitably between 1 and 5 cm, particularly suitably between 1.5 and 2.5 cm. Optionally, the protective material may also be applied on the seedling and/or on the surface of the seedling's trunk.

If protective material is applied on the seedling, the protective material may at least partially cover the seedling, and if protective material is applied on the seedling's trunk, the protective material may at least partially cover the seedling's trunk.

The thickness of the protective material's layer refers to thickness after the layer has been applied; if the protective material contains volatile components, it refers to thickness after the layer has been dried. There can be one or more layers of protective material.

The protective material is selected from liquid, gel-like, waxy, greasy, granular, crystalline, schistose or fine-grained material and combinations thereof.

The liquid material may be an aqueous solution that contains granular, crystalline, schistose or fine-grained material or any combination thereof suspended or blended in a liquid. The liquid material may also contain surfactants.

The gel-like material may be liquid material to which one or more gel-forming agents have been added, such as cellulose, cellulose derivates, starch, starch derivates or the like. It may also contain granular, crystalline, schistose or fine-grained material suspended or blended in it.

The greasy material may comprise fatty acids and/or oil that contains fatty acid esters, such as vegetable oil, suitably rapeseed oil, sunflower oil, soy oil or the like. Furthermore, the greasy material contains granular, crystalline, schistose or fine-grained material or any combination thereof suspended or blended in it.

The waxy material may comprise long-chain (C10-C30) fatty alcohols, paraffin waxes and other natural waxes or combinations thereof. Further, the waxy material contains granular, crystalline, schistose or fine-grained material or any combination thereof suspended or blended in it.

The granular, crystalline, schistose or fine-grained material may comprise inorganic material that may be sand, silicon carbide, vermiculite, calcinated clay such as Leca particles, mineral particles such as mica, quartz, rock particles such as pumice, perlite, cinder or any combination thereof. The material may be a coarser granule having a larger particle size, schistose material or material whose particle size is more fine-grained.

Optionally, the protective material may also contain insecticides, suitably suspended in liquid, gel-like, waxy or greasy material. If needs be, organic solvents may be used to suspend or dissolve the insecticide.

Optionally, the seedlings may be treated conventionally with insecticides before the planting. Insecticide may also be sprayed on the seedling in connection with the seedling planting, either after applying the protective material or simultaneously in connection with the application of the protective material.

Suitable insecticides are for instance alpha-supermethrin, imidacloprid and lambda-syhalothrin as well as preparations containing them.

Protective material is applied in connection with planting of seedlings on the surface of the soil surrounding the seedling's trunk by spraying by means of pressure, by draining from the container or by some other suitable means depending on the composition of the protective material. A unified area of protective material is thereby formed around the seedling all the way from the seedling's base. Optionally, also the seedling's trunk, part of the trunk, part of the seedling or the entire seedling can be covered with the protective material.

According to another embodiment, liquid, gel-like, waxy or greasy protective material is first applied and after that a further layer of granular, schistose or fine-grained protective material is applied, wherein the layer has a thickness between 1 and 50 mm, suitably between 10 and 50 mm, particularly suitably between 20 and 40 mm, and which layer forms a unified area around the seedling, wherein the minimum distance of the area's outer edge from the seedling's trunk is between 0.5 and 10 cm, suitably between 1 and 5 cm, particularly suitably between 1.5 and 2.5 cm.

According to yet another embodiment, the mineral soil around the seedling may be blown strongly with high pressure for instance by means of air, wherein clean mineral soil is exposed around the seedling and the mineral soil spreads around the seedling. Suitably, the liquid, gel-like, greasy or waxy protective material is applied on the seedling before the blowing, wherein the mineral soil adheres to the surface of the protective material.

The application of the protective material or materials may be done manually in connection with the planting of a seedling or suitably in connection with machine planting by an apparatus that is operated either automatically or manually.

After applying the protective material or materials, the suitably sticky surrounding soil may be compressed. The compressing can suitably be done with a machine, for instance a planting machine.

Prior to or in connection with the planting the soil is cultivated by an appropriate cultivation method. Suitably, the cultivation is done in connection with the planting.

Fertility of the habitat, soil type, water management, microclimate, the risk of different pests and the seedling material to be used have an impact on which cultivation method is used. Further, ahava susceptibility of the habitat should be considered when determining the cultivation means, e.g. mounding means, and the height of the tussock. Soil cultivation may be done by harrowing, turning or mounding, either manually or by a machine.

Mounding can be suitably carried out as spot mounding, drain mounding, shallow drain mounding or reversal mounding. Spot mounding is suitable for sites that do not have evident arrangement needs for water management. Typically, a spot tussock that is approximately 15 - 20 cm in height is suitable for habitats containing fine-grained grades where there are no drainage needs, but where slight water management -related problems are likely to occur. If the snow cover in the habitat is too shallow or non-existent, the habitat will freeze and become susceptible to damages caused by cold winds. In that case it is preferable that the tussocks are as low as possible.

Reversal mounding is suitable for sites that do not have arrangement needs for water management. The surface of the tussock is typically on the same level as the surrounding soil, which is why the method is particularly suited for ahava susceptible habitats where the water management is in order. For peat soils, drain mounding, also known as drainage mounding, is the most suitable form of mounding.

In mineral soils having arrangement needs for water management, drain mounding is typically used. The drains are typically 50 - 60 cm in depth. If the soil type of the deeper soil layers is silt or clay, the tussock is usually made of surface soil.

Mounding can also be done on drained peat soils, especially in the regeneration of peat soils and rocky habitats, while taking the requirements of the water management and the habitat into consideration.

The height of the tussock varies between 10 and 20 cm, on middle coarse soils between 15 and 20 cm and on fine-grained soils between 5 and 10 cm.

The length and width of the tussock vary between 50 and 80 cm, suitably the width varies between 50 and 60 cm and length between 60 and 80 cm.

In the planting, one seedling is planted in one tussock. The seedling ball, in which the seedling's root system is, is placed suitably in the humus layer so that the planting depth is at least 5 cm.

Application of the protective material may be done manually, by spraying or blowing on it with an appropriate apparatus, or in connection with machine planting with an apparatus that is operated either automatically or manually.

Seedling is a tree seedling of any of the most commonly used wood species in forestry: a seedling of a coniferous tree, e.g. a spruce, pine, fir or larch, or a seedling of a broad-leaved tree, e.g. a birch. The tree plant's age is between 1 month and 5 years, suitably between 5 months and 16 months.

In order to implement the method, an apparatus according to the invention that can be mounted and connected to planting machines of seedlings known as such, suitably to mounding planting machines, can be used, wherein the method may be implemented in connection with machine planting. Tree planting machines are typically mounding and logic-controlled planting machines that are to be connected to devices suitable for forestation, such as track excavators equipped with additional hydraulics, or other machines suitable for similar purposes. Suitably, the bucket or other work device of the machine is changed to a planting machine. The accessories of mounding planting machines typically include a soil preparation head for the purpose of mounding.

One embodiment of the apparatus (100) for protecting tree seedlings in connection with machine planting has been presented in figure 3, from side view 3a and from the front 3b. Planting machine (200) to which the apparatus has been connected has not been illustrated in greater detail, because the apparatus may easily be connected to different kinds of known machines regardless of the brand.

Apparatus (100) for protecting tree seedlings in connection with machine planting comprises:
- a container (10) for the protective material, which container (10) comprises a feed opening (11) for feeding the protective material into the container,
- a dispenser (20) that has been connected to the container (10), suitably below the container, for dispensing the protective material,
- a pipe (30) which is mounted on the dispenser (20) and which directs the protective material to the desired location,
- means (12) for mounting the apparatus on the planting machine and
- means (13) for connecting the device (10) to the planting machine's control system.

Furthermore, figure 3a illustrates a cassette or other container (14) for the seedlings to be planted and a tussock (90). The planting machine typically comprises e.g. a planting pipe, means for compressing the root ball after the planting (compression pads), possible additional means for applying the fertilization and insecticide, and a flushing pipe that has not been presented in the figure. The apparatus and the planting machine have been suitably encapsulated.

Apparatus (100) may be suitably mounted and connected to the planting machine by means (12) that may comprise mechanical mounting means known as such, such as for instance bolts or the like. Optionally, the planting machine and the apparatus (100) may also be mounted and connected to the work machine with the means (12).

Apparatus (100) may be connected to the planting machine's control system with the help of the means (13). The means (13) may comprise systems known as such in the field. The container's (10) size, material and shape may be adjusted according to each planting machine type. The container comprises a feed opening (11) for feeding the protective material, and optionally a lid on the feed opening.

The dispenser (20) for the protective material is suitably connected below the container, and a pipe (30) has been connected to it to feed the protective material to the desired location. The dispenser dispenses the protective material into the pipe (30), from which the protective material is led around the seeding once the planting head has been lifted up after planting the seedling. The dispenser's operation and the apparatus' directing may be enhanced with the help of an optional sighting camera (60) that has been mounted either on the planting machine or the apparatus (100) and connected to the planting machine's control system with the help of means (13). The use of the sighting camera (60) has been illustrated with the help of figure 3b, in which a suitable tussock for the planting is selected with the help of the sighting camera, the seedling is planted, the protective material is applied and finally, the soil around the seedling is compressed. In the figure the apparatus (100) and the planting machine's parts are encapsulated and do not therefore show in the picture. In this way the dosing of the protective material can be directed to the desired location on the seedling to be handled. Further, the sighting camera helps the machine's driver to spot a suitable planting location, especially in areas where the soil grows over with grass during mid and late summer. Optionally, insecticide may also be dispensed with the help of the dispenser either as a separate dose or together with the protective material. Most suitably, the insecticide is dispensed separately and only after compressing the root ball.

The protective material may also be fed to the seedling's root, seedling's trunk or on the seedling via the planting pipe, wherein the protective material is led from the dispenser (20) through the pipe (30) to the planting pipe (not shown in the figures).

By this means methods for protecting the seedling are achieved, which methods may be implemented simultaneously in connection with soil cultivation and planting of seedlings.

The method is suitable for controlling weevils belonging to the family *Curculionidae,* suitably for controlling large pine weevils (Hylobius abietis). The method may suitably be used for instance in connection with forest cultivation and forest regeneration and regeneration of peat soils, wherein the damages and harms caused by the large pine weevil can be avoided or at least reduced.

The method is particularly suitable to be implemented in connection with machine planting, wherein large volumes of seedlings may be planted and simultaneously protected against the large pine weevil in a quick, efficient, economical and ecological way without any chemical insecticides, or at least the use thereof can be reduced. Suitably, in connection with mechanical planting, the machine planting apparatus may simultaneously be used for soil cultivation such as mounding, planting of seedlings, application of protective material or materials, and possible application and compression of the insecticide.

With the help of the method, the compression of the seedlings may be enhanced, since the use of the protective material enhances the compression of the soil and therefore prevents shoots from growing next to the planting seedlings.

With the help of the method, the protective material is only applied on the necessary areas. After hibernation the adult large pine weevils fly and walk on the soil and gnaw and eat the trunks of young seedlings that they encounter. They prefer moving among the growth and humus soil. In this method, in connection with the planting of tree seedlings, an area comprising protective material is formed around the tree plants, the layer of which is thick enough to cover the soil layer underneath it. Large pine weevils try to avoid mineral soils and surfaces that consist of materials resembling mineral material, which is why a walking barrier is formed for the insect. Further, according one embodiment, the protective material applied on the seedling's trunk creates a biting barrier. According to yet another embodiment, when using the insecticide either among the protective material or by spraying it separately on the seedling, a chemical prevention is achieved.

With the help of the method, the damages caused by the weevils belonging to the *Curculionidae* family may be controlled and prevented very efficiently.

The method provides an alternative for controlling pests, wherein the use of chemical insecticides may at least be reduced or avoided altogether, as the use thereof will be increasingly restricted in the future.

## Claims

1. An apparatus (100) for carrying out a method for control of weevils belonging to the family *Curculionidae* in connection with machine planting of tree seedlings in soil, said method comprising the steps where a tree seedling (50) is planted in soil and, in connection with the planting at least one layer of protective material is applied on the surface of the soil surrounding the seedling's trunk (80), wherein said apparatus (100) comprises a container (10) for the protective material, wherein the container (10) comprises a feed opening (11) for feeding the protective material; a dispenser (20) mounted on the container (10); a pipe (30) connected to the dispenser (20); means (12) for mounting the apparatus on the planting machine and means (13) for connecting the apparatus (100) to the planting machine's control system.

2. The apparatus according to claim 1, wherein the apparatus (100) is mounted and connected to a mounding planting machine.

3. The apparatus according to claim 1 or 2, wherein the dispenser (20) is connected below the container (10).

4. The apparatus according to any one of claims 1 - 3, wherein a sighting camera (60) is mounted on the planting machine or the apparatus (100) and connected to the planting machine's control system with the help of means (13).

## Patentansprüche

1. Vorrichtung (100) zum Ausführen eines Verfahrens zur Bekämpfung von Rüsselkäfern aus der Familie der *Curculionidae* in Verbindung mit dem maschinellen Pflanzen von Baumsetzlingen im Boden, wobei das Verfahren die Schritte umfasst, bei denen ein Baumsetzling (50) im Boden gepflanzt wird, und im Zusammenhang mit dem Pflanzen wenigstens eine Lage Schutzmaterial auf die den Setzlingsstamm (80) umgebende Bodenfläche aufgebracht wird, wobei die Vorrichtung (100) umfasst: einen Behälter (10) für das Schutzmaterial, wobei der Behälter (10) eine Eintragsöffnung (11) zum Eintragen des Schutzmaterials umfasst; einen am Behälter (10) montierten Spender (20); ein am Spender (20) montiertes Rohr (30); Mittel (12) zum Montieren der Vorrichtung an der Pflanzmaschine und Mittel (13) zum Anschließen der Vorrichtung (100) an das Steuerungssystem der Pflanzmaschine.

2. Vorrichtung nach Anspruch 1, wobei die Vorrichtung (100) an einer Pflanzmaschine mit Erdhügelaufwurf (Moundering) montiert und angeschlossen ist.

3. Vorrichtung nach Anspruch 1 oder 2, wobei der Spender (20) unterhalb des Behälters (10) angeschlossen ist.

4. Vorrichtung nach einem der Ansprüche 1 bis 3, wobei eine Sichtkamera (60) an der Pflanzmaschine oder Vorrichtung (100) montiert ist und mit Hilfe von Mitteln (13) am Steuerungssystem der Pflanzmaschine angeschlossen ist.

## Revendications

1. Dispositif (100) pour l'exécution d'un procédé pour combattre des coléoptères appartenant à la famille des curculionidés (*Curculionidae*) en liaison avec la plantation mécanique de plants d'arbres dans le sol, ledit procédé comprenant les étapes dans lesquelles un plant d'arbre (50) est planté dans le sol et, en liaison avec la plantation, au moins une couche de matière protectrice est appliquée à la surface du sol entourant le tronc (80) du plant, ledit dispositif (100) comprenant un réservoir (10) pour la matière protectrice, ledit réservoir (10) comprenant une ouverture d'alimentation (11) pour l'amenée de la matière protectrice; un dispenseur (20) monté sur le réservoir (10); un tuyau (30) monté sur le dispenseur (20); des moyens (12) pour monter le dispositif sur la planteuse et des moyens (13) pour raccorder le dispositif (100) au système de commande de la planteuse.

2. Dispositif selon la revendication 1, ledit dispositif (100) étant monté et raccordé sur une planteuse sur butte (mounding).

3. Dispositif selon l'une des revendications 1 ou 2, ledit dispenseur (20) étant raccordé en bas du réservoir (10).

4. Dispositif selon l'une des revendications 1 à 3, une caméra d'observation (60) étant montée sur la planteuse ou le dispositif (100) et raccordée au système de commande de la planteuse à l'aide de moyens (13).
